# EUROPÄISCHE PATENTSCHRIFT

(11) **EP 0 626 773 B1**
(45) Veröffentlichungstag und Bekanntmachung des Hinweises auf die Patenterteilung: **07.02.1996**
(21) Anmeldenummer: 93107857.0
(22) Anmeldetag: 14.05.1993
(51) Int. Cl.: H04M 1/72

(54) **Handfunktelefon mit davon getrenntem Lautsprecher**
Handheld radio-telephone with remote loudspeaker
Radiotéléphone portable avec haut-parleur séparable

(43) Veröffentlichungstag der Anmeldung: 30.11.1994
(73) Patentinhaber: ALCATEL N.V., NL-1077 XX Amsterdam (NL)
(72) Erfinder: Radley, Peter Ernest, Dr., F-75116 Paris (FR)
(74) Vertreter: Knecht, Ulrich Karl

(56) Entgegenhaltungen:
- EP-A- 0 464 011
- DE-A- 2 820 096
- DE-U- 9 200 683
- PATENT ABSTRACTS OF JAPAN vol. 7, no. 52 (E-162)(1197) 2. M rz 1983 JP-A-57 203 359 (MATSUSHITA DENKI SANGYO KK)

## Beschreibung

Die Erfindung betrifft ein Handfunktelefon mit den Merkmalen des Oberbegriffs nach Patentanspruch 1.

Ein solches Handfunktelefon ist aus EP-A-04 64 011 bekannt. Dort wird ein Handfunktelefon beschrieben, das die Form eines Handapparates aufweist und somit im Betrieb in der Nähe des Kopfes gehalten werden muß, was dort zu einer Strahlungsbelastung führt. In EP-A-04 64 011 wird weiterhin eine Freisprecheinrichtung ("hands-free module") beschrieben, die über eine Steckverbindung an das Handfunktelefon angeschlossen ist. Die Freisprecheinrichtung enthält einen Ohrhörer ("external phone unit") und ein Mikrofon ("external microphone"), welche zusätzlich zum internen Lautsprecher bzw. zum internen Mikrofon des Handfunktelefons an die Audiostufe des Sendeempfängers angeschlossen sind. Demnach ist die Freisprecheinrichtung als Zusatzgerät für das Handfunktelefon ausgeführt. Das zusätzliche Volumen, das die Freisprecheinrichtung einnimmt, erschwert die Handhabung des Handfunktelefons, insbesondere beim Transport.

Ein weiteres Handfunktelefon ist aus DE 34 01 518 C2 bekannt. Dort wird ein Handfunktelefon beschrieben, das zu einem kleinvolumigen Gebilde zusammengeklappt werden kann. Im auseinandergeklappten Betriebszustand nimmt es die körpergerechte Form eines Handapparates an. Die Antenne ist im Gehäuse des Handfunktelefons integriert und befindet sich im Betriebszustand in unmittelbarer Nähe zum Kopf des Benutzers. Sie erstreckt sich vom Ohr- bis zum Mundbereich, so daß die entsprechenden Kopfpartien sich direkt im Strahlungsfeld der Antenne befinden. Derzeit werden die gesundheitlichen Auswirkungen von HF-Strahlung auf den menschlichen Organismus intensiv erforscht und diskutiert (s. Artikel "Hochfrequente Strahlung und ihr Gefährdungspotential" von W. Mansfeld in "Nachrichtentechnik, Elektronik" Heft 42, 1992, Berlin). Obwohl noch keine eindeutigen Ergebnisse vorliegen, werden präventiv Lösungen zur Reduzierung derartiger Strahlungsbelastung gesucht.

Weiterhin ist aus DE 38 36 406 ist ein handapparatförmiges Funkbedienteil bekannt, das in ein zusammenschiebbares Gehäuse integriert ist und dadurch für den Transport sehr kompakt ausgeführt ist. Für den Betrieb wird das Gehäuse zu einem handapparatförmigen Gebilde ergonomisch so ausgebildet, daß es sich der Kopfform des Benutzers anpaßt. Die Sende-/Empfangsantenne befindet sich in unmittelbarer Nähe zum oberen Kopfbereich des Benutzers.

Die bekannten Handfunktelefone, z.B. die sogenannten "Hand-Helds" für Mobilfunk oder schnurlose Telefone sind aufgrund der Kopfform des Menschen so gestaltet, daß sie im Betriebszustand zumindest die Größe eines herkömmlichen Handapparates annehmen und die Antenne sich in unmittelbarer Nähe zum Kopf des Benutzers befindet.

Aufgabe der Erfindung ist es, ein Handfunktelefon zu gestalten, das sich seinem Benutzer gegenüber durch Kompaktheit, volle Bedienbarkeit und geringe HF-Strahlung auszeichnet.

Gelöst wird die Aufgabe durch die Merkmale des Anspruchs 1.

Es wird ein Handfunktelefon bereitgestellt, bei dem mindestens eines der elektroakustischen Komponenten räumlich getrennt von den anderen Komponenten des Handfunktelefons ist. Durch diese räumliche Trennung ist die Gestalt des Handfunktelefons unabhängig von der Kopfform, so daß das Handfunktelefon nicht die Form eines Handapparates annehmen muß und sehr kompakt ausführbar ist. Weiterhin sind alle Bedienmittel sowie die elektrooptischen Anzeige- und Aufnahmemittel auch im Betriebszustand uneingeschränkt zugänglich. Somit ist eine volle Bedienbarkeit des Handfunktelefons gegeben. Die räumliche Unterteilung des Handfunktelefons erlaubt seine uneingeschränkte Benutzung, bei der die hochfrequent abstrahlenden Komponenten des Handfunktelefons sich nicht in unmittelbarer Nähe zum Körper des Benutzers befinden. Dadurch wird die Intensität der HF-Strahlung insbesondere im Kopfbereich des Benutzers verringert.

Vorteilhafte Weiterbildungen der Erfindung sind den Unteransprüchen zu entnehmen.

Es folgt die genaue Beschreibung zweier Ausführungsbeispiele der Erfindung anhand der Zeichnungen:
- Fig. 1,: die ein sehr kompaktes Handfunktelefon schematisch darstellt, und
- Fig. 2,: die ein Handfunktelefon für Audio- und Videokommunikation schematisch darstellt.

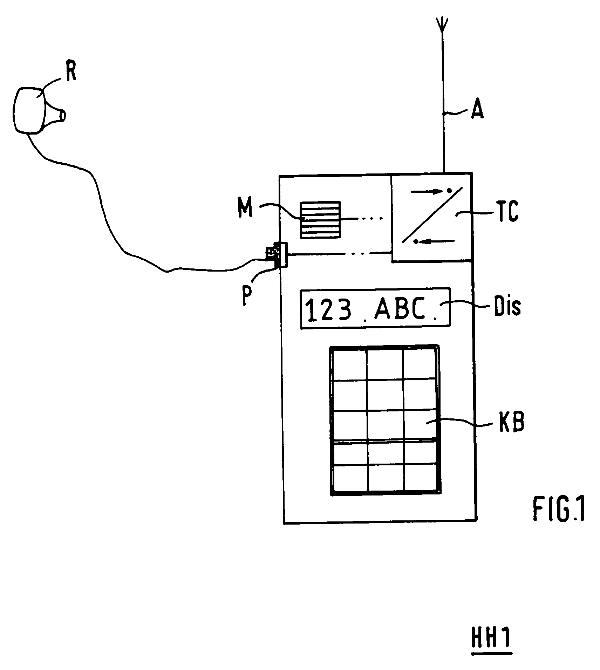

In Fig. 1 ist ein Handfunktelefon HH1 mit einem HF-Sendeempfänger TC, einer daran angeschlossenen Antenne A, einer Bedientastatur KB, einem alphanumerischen Anzeigefeld DIS, einem Mikrofon M und einer Hörkapsel R dargestellt.

In diesem Beispiel ist das gezeigte Handfunktelefon HH1 ein sogennantes Hand-Held für den Mobilfunk. Die Erfindung ist aber nicht auf Mobilfunktelefone beschränkt, sondern umfaßt z.B. auch schnurlose Telefone.

Die detaillierte Schaltung und Funktion eines Handfunktelefons sind nicht Gegenstand der Erfindung. Um jedoch beispielhaft die Hardware- und Software-Architektur eines herkömmlichen Handfunktelefons aufzuzeigen, wird auf den Artikel von P. Schöffel et. al. "Architektur eines Mobilfunkgerätes für das Netz D" in der Zeitschrift Philips Innovation 1/1991 verwiesen.

Die Hörkapsel R ist räumlich von den übrigen Komponenten des Handfunktelefons HH1 getrennt, so daß das Handfunktelefon zweiteilig aufgebaut ist.

Das Handfunktelefon weist somit ein Gehäuse auf, das alle Komponenten bis auf die Hörkapsel R umfaßt. Das Gehäuse ist aus folgenden Gründen sehr kompakt gestaltet: Zum einen umfaßt das Gehäuse keinen Lautsprecher, zum anderen ist die Formgebung des Gehäuses nicht wie bei herkömmlichen Handfunktelefonen vom Mund-zu-Ohr-Abstand des Menschen eingeschränkt.

Die Hörkapsel R ist mittels einer NF-Leitung und einer lösbaren Steckverbindung P an die interne Schaltung des Handfunktelefons HH1 angeschlossen. Das Mikrofon M befindet sich im Gehäuse des Handfunktelefons und ist vorzugsweise als Richtmikrofon ausgeführt. Somit ist eine gute akustische Anbindung des Benutzers auch dann gegeben, wenn dieser das Handfunktelefon weit vom Körper hält oder auf einer Unterlage abstellt.

Die hochfrequent abstrahlende Antenne befindet sich dann in einem Abstand zum Körper, der mindestens eine Armlänge, d.h. etwa 60 cm, mißt. Bei der Benutzung der bekannten Handfunktelefone befindet sich die Antenne in einem Abstand von etwa 2 cm zum Kopf. Demnach ist der Benutzer des erfindungsgemäßen Handfunktelefons einer Funkfeldstärke ausgesetzt, die etwa im Verhältnis 1/30 = 2 cm/60 cm reduziert ist.

Weiterhin ist der Zugriff auf die Bedientastatur KB und das Ablesen des Anzeigefeldes DIS auch während des Telefonierens uneingeschränkt möglich. Somit kann der Benutzer z.B. eintreffende Textnachrichten lesen, wie sie etwa im Mobilfunk als sogenannte Short-Messages bekannt sind. Weiterhin ist die Abfrage von abgespeicherten Daten, wie etwa Rufnummern, Adressen, Termine etc. jederzeit mittels Tastatureingabe möglich.

Um das gezeigte Handfunktelefon HH1 noch kompakter zu gestalten, wäre eine Integration der Antenne in das Gehäuse denkbar.

Neben der Hörkapsel R ist auch die räumliche Ausgliederung des Mikrofons M denkbar, so daß das Gehäuse des Handfunktelefons noch kompakter ausgeführt werden könnte. Gleichfalls wäre der Benutzer z.B. mittels eines Sprech- und Hörgeschirrs akustisch sehr eng angekoppelt.

Das in Fig. 1 gezeigte Handfunktelefon HH1 ist eine sehr einfache und kostengünstige Ausführung der Erfindung.

Im weiteren wird eine Ausführung eines Handfunktelefons beschrieben, das für die Audio- und Video-Kommunikation geeignet ist.

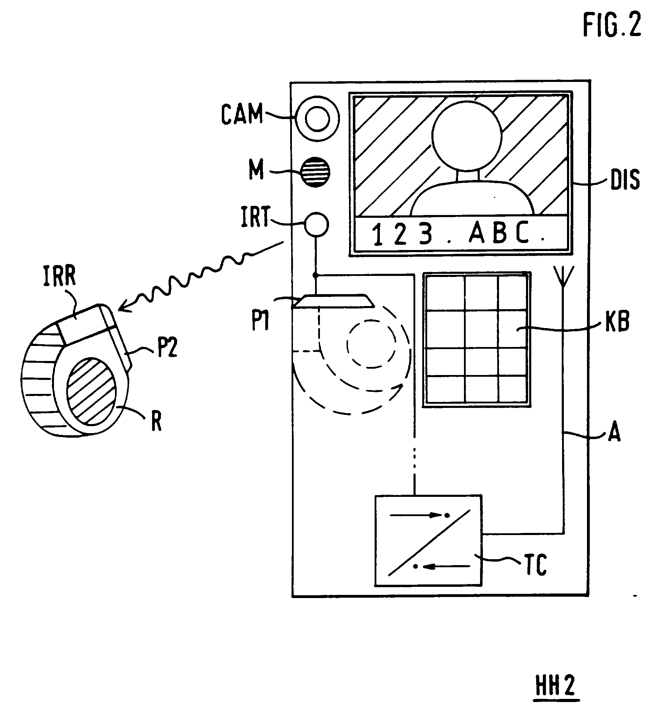

In Fig. 2 ist ein Handfunktelefon HH2 dargestellt, das neben den im vorherigen Beispiel beschriebenen Komponenten noch zusätzlich einen LCD-Bildschirm DIS und eine CCD-Kamera CAM umfaßt.

Das elektroakustische Wiedergabemittel ist hier als Hörmuschel R ausgeführt, die von den übrigen Komponenten räumlich abgesetzt ist und einen Infrarotempfänger IRR zum drahtlosen Anschluß an das Handfunktelefon HH2 enthält.

Das Gehäuse des Handfunktelefons enthält einen entsprechenden Infrarotsender IRT, der an dem NF-Ausgang des HF-Empfängers TC angeschlossen ist. Durch die drahtlose Verbindung zwischen dem Gehäuse des Handfunktelefons HH2 und der Hörmuschel R ist eine große Bewegungsfreiheit für den Benutzer gegeben.

Weiterhin ist auch hier durch die räumliche Trennung die volle Bedienbarkeit des Handfunktelefons gegeben. Der in diesem Beispiel notwendige Abstand vom Benutzer zum Bildschirm DIS und zur Kamera CAM wäre bei einem Handfunktelefon bekannter Bauart nicht zu realisieren.

Die Hörmuschel R hat einen elektromechanischen Stecker P2 und das Gehäuse des Handfunktelefons HH2 verfügt über ein entsprechende elektromechanische Buchse P1, so daß eine Integration der Hörmuschel R in das Gehäuse des Handfunktelefons möglich ist. Dadurch wird sowohl ein einfacher Transport sowie ein Freisprechbetrieb des Handfunktelefons HH2 ermöglicht.

Die Antenne A des Handfunktelefons HH2 ist vollständig in das Gehäuse integriert. Das Gehäuse ist so gestaltet, daß es sowohl in der Hand gehalten als auch auf eine Unterlage, wie z.B. einen Schreibtisch, gestellt werden kann.

Das in Fig. 2 gezeigte Handfunktelefon könnte auch derart verändert werden, daß nur das Mikrofon M räumlich zu den anderen Komponenten abgesetzt wäre. Dieses wäre etwa für Videokonferenzanwendungen vorteilhaft. Hier sind hohe Qualitätsanforderungen an die Sprachaufnahme gestellt, um z.B. Simultanübersetzungen mittels Fachpersonal oder Sprachcomputern zu ermöglichen.

Die beschriebenen Ausführungen beziehen sich insbesondere auf ein Handfunktelefon für den Mobilfunk, wie beispielsweise ein Hand-Held für den GSM-Mobilfunk. Die Erfindung ist jedoch nicht auf diese Ausführungen beschränkt. Es ist insbesondere auch ein erfindungsgemäßes Handfunktelefon denkbar, das als schnurloses Telefon nach dem CT1-, dem CT2- oder DECT-Standard ausgeführt ist (CT: Cordless Telephone; DECT: Digital European Cordless Telephone). Diesbezüglich ist der Einsatz im Freien als sogenanntes Telepoint-Telefon vorteilhaft, da das Handfunktelefon für Transport und Betrieb sehr kompakt ausgeführt ist.

## Patentansprüche

1. Handfunktelefon (HH1; HH2) mit Komponenten, die HF-Sende-/Empfangs-Mittel (TC, A) zum drahtlosen Nachrichtenaustausch innerhalb eines Telekommunikationssystems, Bedien-Mittel (KB) zum Aufbau einer Nachrichtenverbindung, nur ein elektroakustisches Wiedergabe-Mittel (R) und nur ein elektroakustisches Aufnahme-Mittel (M) umfassen,
**gekennzeichnet durch** ein Gehäuse, das alle Komponenten des Handfunktelefons (HH1; HH2) bis auf zumindest eines der elektroakustischen Mittel (R) umfaßt, wodurch dieses zumindest eine elektroakustische Mittel (R) räumlich getrennt von den anderen Mitteln (TC, A, KB, DIS, CAM) angeordnet ist.

2. Handfunktelefon (HH2), nach Anspruch 1,
dadurch gekennzeichnet, daß die Komponenten noch zusätzlich elektrooptische Anzeige- und/oder Aufnahme-Mittel (DIS, CAM) umfassen und daß nur eines der elektroakustischen Mittel (R) räumlich getrennt von den anderen Mitteln (TC, A, DIS, CAM) angeordnet ist.

3. Handfunktelefon (HH1) nach Anspruch 1,
dadurch gekennzeichnet, daß diejenigen elektroakustischen Mittel (R), die räumlich getrennt von den anderen Mitteln (TC, A, KB) angeordnet sind, mittels mindestens einer lösbaren Steckverbindung (P) drahtgebunden mit den HF-Sende-/Empfangs-Mitteln (TC, A) verbunden sind.

4. Handfunktelefon (HH2) nach Anspruch 1,
dadurch gekennzeichnet, daß diejenigen elektroakustischen Mittel (R), die räumlich getrennt von den anderen Mitteln (TC, A, DIS, CAM) angeordnet sind, mittels mindestens einem Sendemittel (IRT) und mindestens einem Empfangsmittel (IRR) drahtlos mit den HF-Sende-/Empfangs-Mitteln (TC, A) verbunden sind.

5. Handfunktelefon (HH2) nach Anspruch 4,
dadurch gekennzeichnet, daß die Sendemittel (IRT) und die Empfangsmittel (IRR) Infrarotsignale senden bzw. empfangen.

6. Handfunktelefon (HH2) nach Anspruch 4,
dadurch gekennzeichnet, daß mechanische und/oder elektromechanische Verbindungsmittel (P1, P2) so vorgesehen sind, daß die räumlich voneinander getrennten Mittel (R, TC) wieder zusammenfügbar sind.

7. Handfunktelefon (HH1) nach Anspruch 1,
dadurch gekennzeichnet, daß das elektroakustische Aufnahmemittel (M) ein Richtmikrofon ist, das sich im Gehäuse des Handfunktelefons (HH1) befindet.

8. Handfunktelefon nach Anspruch 1 oder 2,
dadurch gekennzeichnet, daß nur das elektroakustische Aufnahme-Mittel räumlich getrennt von den anderen Mitteln angeordnet ist, wobei das elektroakustische Aufnahme-Mittel ein räumlich zu den anderen Komponenten abgesetztes Mikrofon ist.

9. Handfunktelefon (HH2) nach Anspruch 1 oder 2,
dadurch gekennzeichnet, daß das Gehäuse des Handfunktelefons (HH2) so gestaltet ist, daß es in der Hand gehalten und auf eine Unterlage gestellt werden kann.

## Claims

1. A hand-held radiotelephone (HH1; HH2) with components comprising RF transmitting/receiving means (TC, A) for radio communication within a telecommuncation system, control means (KB) for establishing a communication link, only one electroacoustic reproducing means (R), and only one electroacoustic pickup means (M),
**characterized by** a housing which comprises all components of the hand-held radiotelephone (HH1; HH2) except at least one of the electroacoustic means (R), whereby said at least one electroacoustic means (R) is spatially separated from the other means (TC, A, KB, DIS, CAM).

2. A hand-held radiotelephone (HH2),
characterized in that the components additionally comprise electrooptical display and/or pickup means (DIS, CAM), and that only one of the electroacoustic means (R) is spatially separated from the other means (TC, A, DIS, CAM).

3. A hand-held radiotelephone (HH1) as claimed in claim 1,
characterized in that those of the electroacoustic means (R) which are spatially separated from the other means (TC, A, KB) are connected to the RF transmitting/receiving means (TC, A) by wire, using at least one separable connector (P).

4. A hand-held radiotelephone (HH2) as claimed in claim 1,
characterized in that those electroacoustic means (R) which are spatially separated from the other means (TC, A, DIS, CAM) are connected to the RF transmitting/receiving means (TC, A) without wires, using at least one transmitting means (IRT) and at least one receiving means (IRR).

5. A hand-held radiotelephone (HH2) as claimed in claim 4,
characterized in that the transmitting means (IRT) and the receiving means (IRR) transmit and receive infrared signals, respectively.

6. A hand-held radiotelphone (HH2) as claimed in claim 4,
characterized in that mechanical and/or electromechanical connecting means (P1, P2) are provided for interconnecting the spatially separated means (R, TC).

7. A hand-held radiotelephone (HH1) as claimed in claim 1,
characterized in that the electroacoustic pickup means (M) is a directional microphone provided in the housing of the hand-held radiotelephone (HH1).

8. A hand-held radiotelephone as claimed in claim 1 or 2,
characterized in that only the electroacoustic pickup means is spatially separated from the other means, the electroacoustic pickup means being a microphone located remotely from the other components.

9. A hand-held radiotelephone (HH2) as claimed in claim 1 or 2,
characterized in that the housing of the hand-held radiotelephone (HH2) is so designed that it can be held in the hand and set down on a supporting surface.

## Revendications

1. Radiotéléphone portable (HH1 ; HH2) comportant des composants qui comprennent des moyens d'émission/réception HF (TC, A) pour un échange d'informations sans fil à l'intérieur d'un système de télécommunications, un moyen de commande (KB) pour la constitution d'une liaison d'informations, seulement un moyen de retransmission (R) électro-acoustique et seulement un moyen de réception (M) électro-acoustique, caractérisé par un boîtier renfermant tous les composants du radiotéléphone portable (HH1, HH2) à l'exception d'au moins l'un des moyens électro-acoustiques (R), cet au moins un moyen électro-acoustique (R) étant spatialement séparé des autres moyens (TC, A, KB, DIS, CAM).

2. Radiotéléphone portable (HH2) suivant la revendication 1, caractérisé en ce que les composants comportent en outre des moyens d'affichage et/ou réception (DIS, CAM) électro-optiques et en ce qu'un seul des moyens électro-acoustiques (R) est séparé spatialement des autres moyens (TC, A, DIS, CAM).

3. Radiotéléphone portable (HH1) suivant la revendication 1, caractérisé en ce que les moyens électro-acoustiques (R) qui sont séparés spatialement des autres moyens (TC, A, KB,) sont raccordés par des fils aux moyens d'émission/réception HF (TC, A) par l'intermédiaire d'au moins un strap (P) amovible.

4. Radiotéléphone portable (HH2) suivant la revendication 1, caractérisé en ce que les moyens électro-acoustiques (R) qui sont séparés spatialement des autres moyens (TC, A, DIS, CAM) sont raccordés sans fil aux moyens d'émission/réception HF (TC, A) par l'intermédiaire d'au moins un moyen d'émission (IRT) et d'au moins un moyen de réception (IRR).

5. Radiotéléphone portable (HH2) suivant la revendication 4, caractérisé en ce que les moyens d'émission (IRT) et les moyens de réception (IRR) émettent ou reçoivent des signaux infrarouges.

6. Radiotéléphone portable (HH2) suivant la revendication 4, caractérisé en ce que les moyens de raccordement (P1, P2) mécaniques et/ou électromagnétiques sont réalisés de telle sorte que les moyens (R, TC) séparés spatialement l'un de l'autre peuvent être de nouveau réunis.

7. Radiotéléphone portable (HH1) suivant la revendication 1, caractérisé en ce que le moyen d'enregistrement électro-acoustique (M) est un microphone directeur qui se trouve dans le boîtier du radiotéléphone portable (HH1).

8. Radiotéléphone portable (HH2) suivant la revendication 1 ou 2, caractérisé en ce que seul le moyen d'enregistrement électro-acoustique est séparé spatialement des autres moyens, le moyen d'enregistrement électro-acoustique étant un microphone retiré spatialement par rapport aux autres composants.

9. Radiotéléphone portable (HH2) suivant la revendication 1 ou 2, caractérisé en ce que le boîtier du radiotéléphone portable (HH2) est configuré de telle sorte qu'il peut être tenu dans la main et être posé sur un support.
